# EUROPEAN PATENT APPLICATION

(11) **EP 1 507 345 A2**
(43) Date of publication of application: **16.02.2005**
(21) Application number: 04019570.3
(22) Date of filing: 27.11.1996
(51) Int. Cl.: H04B 10/18

(54) **Optical communications system with dispersion compensation**

(30) Priority: 27.11.1995 GB 9524203
(62) Divisional of application: 96939999.7
(71) Applicant: BTG INTERNATIONAL LIMITED, London EC4M 7SB (GB)
(72) Inventor: Doran, Nicholas John, Stratford Upon Avon Coventry CV37 6XU (GB); Smith, Nicholas John, Kent CP1 3EX (GB)
(74) Representative: Critten, Matthew Peter

(57) **Abstract**

An optical communications system in which information is transmitted by soliton or soliton-like pulses comprises fibres having dispersion of a first sign and compensators having dispersion of a second sign. The compensators are discrete dispersion compensators.

## Description

This invention relates to optical communications and, in particular, to optical communications systems in which information is transmitted by soliton or soliton-like pulses.

Laboratory demonstrations have recently been reported of soliton transmission in systems where the dispersion was not uniformly anomalous along the fibre, instead being periodically compensated by fibre of opposite (normal) sign dispersion. In this manner transmission was achieved at 20Gb/s over 9000km in a recirculating loop, and 8100km in a straight line experiment. These figures are substantially in excess of what has previously been achieved without the use of soliton control techniques such as sliding filters and synchronous modulators. While it is thus clear that there are significant benefits to be gained from adopting dispersion management in soliton systems, to date there has been little conceptual explanation of the mechanisms behind this improvement.

The correct selection of dispersion is a critical issue in the design of amplified long haul optical communication systems. In the case of soliton formatted data, it is dictated by compromise between the desire to minimise timing jitter problems (implying low dispersion), and the need to maintain adequate energy per bit for successful detection. As the energy needed to form a soliton in a uniform fibre is proportional to the dispersion, the latter constraint places a lower limit on the permitted dispersion. Dispersion management is a technique in the context of non-retum-to-zero (NRZ) formatted data in which fibres of opposite sign dispersions are concatenated together. This produces a high local dispersion at any given point, and yet a low path-average dispersion. We have found that, by adopting a suitable dispersion management scheme for soliton or soliton-like transmission, it is possible to increase the soliton energy substantially compared with the equivalent uniform fibre with equal path-average dispersion.

According to a first aspect of the invention there is provided an optical communications system in which information is transmitted by soliton or soliton-like pulses, the system comprising fibres having dispersion of a first sign and compensators having dispersion of a second, opposite, sign characterised in that the compensators are discrete dispersion compensators.

According to a second aspect of the invention there is provided a method of optical communication comprising generating a plurality of optical pulses and launching the pulses for propagation through an optical communications system, characterised in that the pulses are launched for propagation through an optical communications system according to the first aspect of the invention.

According to a third aspect of the invention there is provided use of an optical communication system according to the first aspect of the invention, comprising launching pulses for propagation in the system.

According to a fourth aspect of the invention there is provided use of an optical communication system according to the first aspect of the invention, comprising receiving pulses that have propagated in the system.

Preferably, the dispersion variation, between the fibres having dispersion of the first sign and compensators having dispersion of the second sign, is sufficiently large that the system permits propagation of pulses having a time-bandwidth product greater than the time-bandwidth product of a Gaussian-shaped pulse.

According to a fifth aspect of the invention there is provided an optical communications system comprising fibres of anomalous dispersion and fibres of normal dispersion, such that dispersion in the system varies between anomalous and normal dispersion characterised in that the dispersion variation is sufficiently large that the system permits propagation of pulses having a time-bandwidth product greater than the time-bandwidth product of a Gaussian-shaped pulse.

According to a sixth aspect of the invention there is provided a method of optical communication, the method comprising generating a plurality of optical pulses and launching the pulses for propagation through an optical communications system, characterised in that the pulses are launched for propagation through an optical communications system according to the fifth aspect of the invention.

Preferably, the generated pulses have a time-bandwidth product greater than the time-bandwidth product of a Gaussian-shaped pulse.

According to a seventh aspect of the invention there is provided use of a system according to the fifth aspect of the invention, comprising launching, for propagation in the system, pulses having a time-bandwidth product greater than the time-bandwidth product of a Gaussian-shaped pulse.

According to an eighth aspect of the invention there is provided use of a system according to the fifth aspect of the invention, comprising receiving pulses having a time-bandwidth product greater than the time-bandwidth product of a Gaussian-shaped pulse, the pulses having propagated in the system.

According to an ninth aspect of the invention there is provided an optical communication system in which information is transmitted by soliton or soliton-like pulses, the system comprising fibres of anomalous dispersion and fibres of normal dispersion characterised in that the system has a path average dispersion of zero and in that the system further comprises optical filters arranged to balance self-phase modulation of propagating pulses such that the pulses are stable or quasi-stable.

According to a tenth aspect of the invention, there is provided a method of optical communication, the method comprising generating a plurality of optical pulses and launching the pulses for propagation through an optical communications system, characterised in that the pulses are launched for propagation through an optical communications system according to the ninth aspect of the invention.

Preferably, the pulses are launched at a wavelength corresponding to zero path-average dispersion in the system.

According to an eleventh aspect of the invention there is provided use of a system according to the ninth aspect of the invention, comprising launching, for propagation in the system, pulses at a wavelength corresponding to zero path-average dispersion in the system.

According to a twelfth aspect of the invention there is provided use of a system according to the ninth aspect of the invention, comprising receiving pulses that have propagated in the system at a path-average dispersion of zero.

According to a thirteenth aspect of the invention there is provided use of an optical communications system in which information is transmitted by soliton or soliton-like pulses, the system comprising fibres of anomalous dispersion and fibres of normal dispersion characterised in that the use of the system is made in order to achieve a reduced efficiency of four-wave mixing compared with the efficiency of four-wave mixing in the equivalent uniform fibre having the same path average dispersion.

Preferably, the reduced efficiency of four-wave mixing is a reduction in the rate of self-phase modulation, such that a higher pulse energy is required to balance the path average dispersion than in the equivalent uniform system with the same path average dispersion.

The following preferable features may be found in embodiments of the first to thirteenth aspects of the invention;

Preferably, the dispersion variation is sufficiently large that the system permits propagation of pulses having a time-bandwidth product greater than the time-bandwidth product of the hyperbolic secant of regular optical-fibre solitons.

Preferably, the dispersion variation is sufficiently large that the system permits propagation of Gaussian pulses.

Preferably, the dispersion variation is sufficiently large that the system permits propagation of pulses having a time-bandwidth product greater than the time-bandwidth product of a Gaussian-shaped pulse.

Preferably, pulses are launched with more pulse energy than in the equivalent uniform system with equal path-average dispersion.

Preferably, the system has a path-average dispersion that is anomalous.

Preferably, pulses launched into the system with an initial peak power exhibit an average peak power in the system that is lower than that initial peak power.

Preferably, the system comprises a periodic arrangement of unit cells, each unit cell comprising a fibre section that exhibits normal dispersion and a fibre section that exhibits anomalous dispersion.

Preferably, no fibre section has a dispersion that is substantially closer to zero than that of its complementary fibre section. Preferably, the difference between the dispersion of a fibre section and the dispersion of its complementary fibre section is 0.1 ps²/km or more. More preferably, the difference between the dispersion of a fibre section and the dispersion of its complementary fibre section is 4.0ps²/km or more. Still more preferably, the difference between the dispersion of a fibre section and the dispersion of its complementary fibre section is 12.0ps²/km or more.

Preferably, the pulse intensity profile at the start of each unit cell remains substantially unchanged over successive cycles.

In an example embodiment of the present invention there is provided a dispersion management system for soliton or soliton-like transmission, in which fibres of opposite sign dispersions are preferably concatenated together, and in which the duration of a dispersion compensation phase is short in comparison with the propagation interval in the remainder of the system and that the path average dispersion is anomalous.

Preferably the system excludes arrangements in which the dispersion map of one fibre is substantially closer to zero than that of its complementary fibre.

The invention will be particularly described with reference to the accompanying drawings in which:
Figure 1 is a dispersion compensation map;
Figure 2 shows the pulse profile at the beginning of each unit cell in a dispersion managed system. The dispersion map comprises alternating 100km fibres with dispersions of -3ps²/km and +2.8ps²/km;
Figure 3 shows the evolution of a over one period of the dispersion compensation cycle;
Figure 4 shows the energy required to launch a 20ps FWHM soliton in dispersion managed system with alternating 100km length fibres chosen such that the path-average dispersion remains at -0.1 ps²/km, and
Figure 5 is an outline diagram of a dispersion management system in accordance with one aspect of the invention.

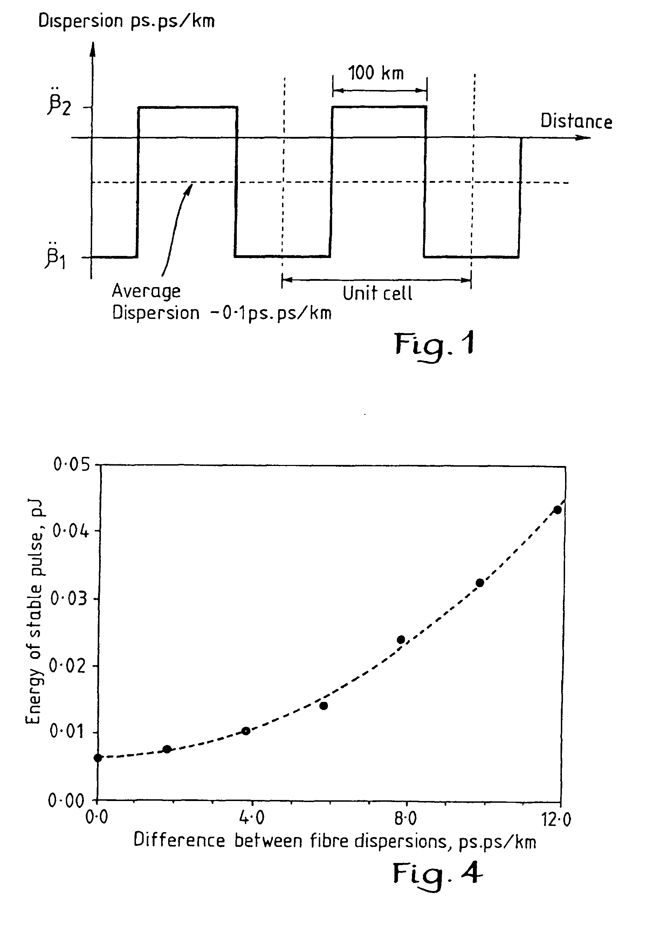

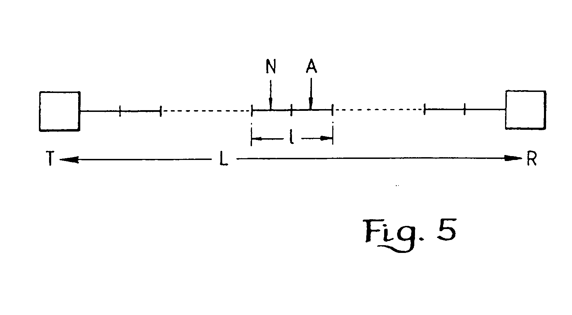

Our work is based upon numerical integration of the Nonlinear Schrodinger Equation (NLS), using the dispersion map shown in Figure 1. The arrangement of a typical system is shown in Figure 5 and comprises a transmitter T and Receiver R lined by a length L of fibre. This fibre is divided into elements 1 comprising separate sections of fibre N with normal dispersion and fibre A with anomalous dispersion. In a specific embodiment these are of equal length, although the unit cell is defined to start and end at the mid point of one of the fibres. In the specific examples presented, each of the fibres will be 100km long, and the path average dispersion -0.1ps²/km. The nonlinear coefficient was taken to be 2.65rad/W/km. To simplify the problem we have chosen to neglect loss and high order dispersion throughout.

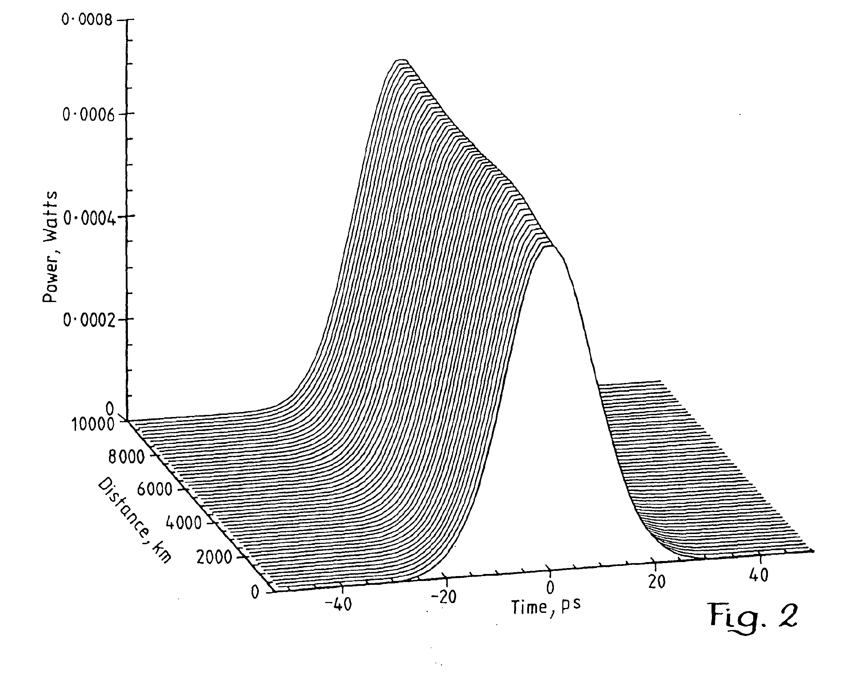

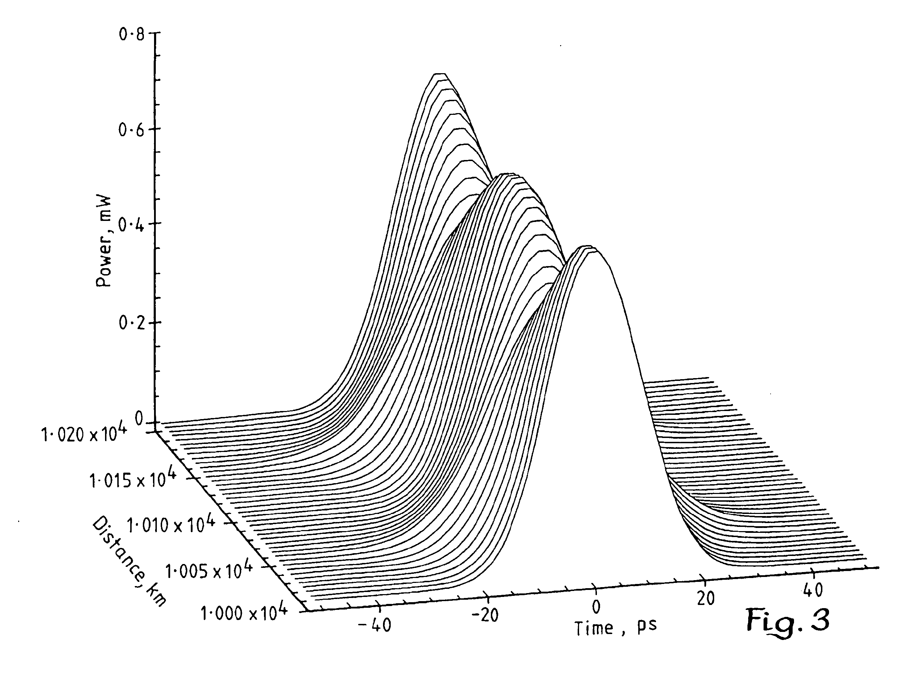

We have confirmed the existence of quasi-stable soliton or solitary wave solutions to this dispersion map. Figures 2 and 3 show the observed behaviour when the dispersion values alternated between -3.0ps²/km and +2.8ps²/km, and a 20ps FWHM Gaussian pulse of peak power 650µW was launched into the fibre. Figure 2 shows the intensity profiles at the start of each unit cell; it can be seen that the pulse profile at these points remains unchanged over successive cycles of the dispersion map. The evolution within one unit cell is shown in Figure 3, the pulse alternately compressing and dispersing as the sign of the dispersion is switched. The power spectrum remains essentially unchanged within the unit cell.

There are three constraints which must be satisfied to obtain stable solutions to the periodic dispersion map. Firstly, the path average dispersion must be anomalous, in order that the Kerr induced spectral broadening can be compensated. Secondly, the period of the dispersion compensation cycle must be short compared to the nonlinear length of the system. For a 1000Km fibre, the dispersion compensation length is preferably 100Km or less. Finally, dispersion maps in which one of the fibres is much closer to zero dispersion than the other should be avoided, as otherwise energy is rapidly coupled out of the pulse into dispersive waves.

The advantages conferred by a dispersion management scheme on soliton communications stems from the fact that more energy is required to launch a stable pulse than in the equivalent uniform system with equal path average dispersion. This is demonstrated in Figure 4, which plots the pulse energy of the stable solution as a function of the difference between the dispersion values of the two individual fibres. Greater differences between the two fibres results in more energy being required to form a stable pulse; we have also found that lengthening the unit cell's period (with a given pair of dispersion values) increases the required energy. The mechanism behind this increased energy requirement can be understood from the intensity profile within the unit cell, figure 3. Due to the cycle of dispersive broadening and compression, the peak power of the pulse is generally lower than the initial launch power. Therefore the rate of self phase modulation (SPM) is reduced compared to the equivalent uniform fibre, and so more energy is required to balance the path-average dispersion. In the frequency domain, the process could be construed as a reduction in the efficiency of four wave mixing of which SPM is a special case.

Another highly novel feature of these solitary waves is that their pulse shapes are not the hyperbolic secants of regular optical fibre solitons. The example pulse profile which we have displayed is almost exactly Gaussian in nature, however this is only a special case for that particular dispersion map. As the dispersion variation is increased there is a transition from the uniform fibre hyperbolic secant soliton (time-bandwidth-product 0.32) to Gaussian (0.44) form, and then to pulse shapes with higher still time-bandwidth-products. An interesting connection can be made at this point with the "stretched pulse" design of mode-locked fibre laser. These incorporate cavities with two opposite signs of dispersion and also produce Gaussian shaped pulses.

In cases of soliton or soliton-like transmission in dispersion compensated fibres employing a configuration with zero path average dispersion, undistorted pulse propagation was obtained in this situation due to the presence of optical filters in the recirculating loop. The stable pulses then arose from balancing SPM against filtering, rather than SPM against the path-average dispersion.

The technique of dispersion management has the potential to make a significant impact of the realisation of soliton communication systems. It provides major performance benefits, and has the distinct advantage of requiring only passive components. While, in a preferred embodiment, we have used equal lengths of two different fibres, alternative embodiments may use discrete dispersion compensators fabricated from highly dispersive materials. The adoption of dispersion management represents a convergence between the techniques used in soliton and NRZ formatted transmission.

## Claims

1. An optical communications system in which information is transmitted by soliton or soliton-like pulses, the system comprising fibres having dispersion of a first sign and compensators having dispersion of a second, opposite, sign **CHARACTERISED IN THAT** the compensators are discrete dispersion compensators.

2. A method of optical communication, the method comprising generating a plurality of optical pulses and launching the pulses for propagation through an optical communications system, **CHARACTERISED IN THAT** the pulses are launched for propagation through an optical communications system according to claim 1.

3. Use of an optical communication system according to claim 1 comprising launching pulses for propagation in the system.

4. Use of an optical communication system according to claim 1 comprising receiving pulses that have propagated in the system.

5. A system, method or use according to any of claims 1 to 4, in which the dispersion variation, between the fibres having dispersion of the first sign and compensators having dispersion of the second sign, is sufficiently large that the system permits propagation of pulses having a time-bandwidth product greater than the time-bandwidth product of a Gaussian-shaped pulse.

6. An optical communications system comprising fibres of anomalous dispersion and fibres of normal dispersion, such that dispersion in the system varies between anomalous and normal dispersion **CHARACTERISED IN THAT** the dispersion variation is sufficiently large that the system permits propagation of pulses having a time-bandwidth product greater than the time-bandwidth product of a Gaussian-shaped pulse.

7. A method of optical communication, the method comprising generating a plurality of optical pulses and launching the pulses for propagation through an optical communications system, **CHARACTERISED IN THAT** the pulses are launched for propagation through an optical communications system according to claim 6.

8. A method as claimed in claim 7, wherein the generated pulses have a time-bandwidth product greater than the time-bandwidth product of a Gaussian-shaped pulse.

9. Use of an optical communication system according to claim 6 comprising launching, for propagation in the system, pulses having a time-bandwidth product greater than the time-bandwidth product of a Gaussian-shaped pulse.

10. Use of an optical communication system according to claim 6 comprising receiving pulses having a time-bandwidth product greater than the time-bandwidth product of a Gaussian-shaped pulse, the pulses having propagated in the system.

11. An optical communication system in which information is transmitted by soliton or soliton-like pulses, the system comprising fibres of anomalous dispersion and fibres of normal dispersion **CHARACTERISED IN THAT** the system has a path average dispersion of zero and **in that** the system further comprises optical filters arranged to balance self-phase modulation of propagating pulses such that the pulses are stable or quasi-stable.

12. A method of optical communication, the method comprising generating a plurality of optical pulses and launching the pulses for propagation through an optical communications system, **CHARACTERISED IN THAT** the pulses are launched for propagation through an optical communications system according to claim 11.

13. A method as claimed in claim 12, wherein the pulses are launched at a wavelength corresponding to zero path-average dispersion in the system.

14. Use of an optical communication system according to claim 11 comprising launching, for propagation in the system, pulses at a wavelength corresponding to zero path-average dispersion in the system.

15. Use of an optical communication system according to claim 11 comprising receiving pulses that have propagated in the system at a path-average dispersion of zero.

16. Use of an optical communications system in which information is transmitted by soliton or soliton-like pulses, the system comprising fibres of anomalous dispersion and fibres of normal dispersion **CHARACTERISED IN THAT** the use of the system is made in order to achieve a reduced efficiency of four-wave mixing compared with the efficiency of four-wave mixing in the equivalent uniform fibre having the same path average dispersion.

17. Use as claimed in claim 16, in which the reduced efficiency of four-wave mixing is a reduction in the rate of self-phase modulation, such that a higher pulse energy is required to balance the path average dispersion than in the equivalent uniform system with the same path average dispersion.

18. A system, method or use as claimed in any of claims 1 to 5 or 11 to 17, in which the dispersion variation is sufficiently large that the system permits propagation of pulses having a time-bandwidth product greater than the time-bandwidth product of the hyperbolic secant of regular optical-fibre solitons.

19. A system, method or use as claimed in claim 18, in which the dispersion variation is sufficiently large that the system permits propagation of Gaussian pulses.

20. A system, method or use as claimed in claim 18, in which the dispersion variation is sufficiently large that the system permits propagation of pulses having a time-bandwidth product greater than the time-bandwidth product of a Gaussian-shaped pulse.

21. A system, method or use as claimed in any of claims 1 to 15 or 18 to 20, in which pulses are launched with more pulse energy than in the equivalent uniform system with equal path-average dispersion.

22. A system, method or use as claimed in any of claims 1 to 10 or 16 to 21, in which the system has a path-average dispersion that is anomalous.

23. A system, method or use as claimed in any preceding claim, in which pulses launched into the system with an initial peak power exhibit an average peak power in the system that is lower than that initial peak power.

24. A system, method or use as claimed in any preceding claim, in which the system comprises a periodic arrangement of unit cells (1), each unit cell (1) comprising a fibre section (N) that exhibits normal dispersion and a fibre section (A) that exhibits anomalous dispersion.

25. A system, method or use as claimed in claim 24, in which no fibre section (N,A) has a dispersion that is substantially closer to zero than that of its complementary fibre section (A,N).

26. A system, method or use as claimed in claim 24 or claim 25, in which the difference between the dispersion of a fibre section (N) and the dispersion of its complementary fibre section (A) is 0.1ps²/km or more.

27. A system, method or use as claimed in claim 26, in which the difference between the dispersion of a fibre section (N) and the dispersion of its complementary fibre section (A) is 4.ps²/km or more.

28. A system, method or use as claimed in claim 27, in which the difference between the dispersion of a fibre section (N) and the dispersion of its complementary fibre section (A) is 12.0ps²/km or more.

29. A system, method or use as claimed in any of claims 24 to claim 28, in which the pulse intensity profile at the start of each unit cell remains substantially unchanged over successive cycles.
